# EUROPEAN PATENT APPLICATION

(11) **EP 4 459 244 A1**
(43) Date of publication of application: **06.11.2024**
(21) Application number: 24166635.3
(22) Date of filing: 27.03.2024
(51) Int. Cl.: G01G 19/393

(54) **BUCKET FOR A WEIGHING HEAD, IN PARTICULAR FOR A WEIGHING HEAD OF A MULTI-HEAD WEIGHING MACHINE, WEIGHING HEAD AND MULTI-HEAD WEIGHING MACHINE**

(30) Priority: 02.05.2023 IT 202300008571
(71) Applicant: MBP S.r.l., 46043 Castiglione delle Stiviere (Mantova) (IT)
(72) Inventor: FIORAVANTI, Andrea, 46043 Castiglione delle Stiviere (Mantova) (IT); PAVAN, Marco, 46043 Castiglione delle Stiviere (Mantova) (IT)
(74) Representative: Locatelli, Gian Matteo

(57) **Abstract**

A bucket (10) for a weighing head, in particular for a weighing head of a multi-head weighing machine, comprising a containment body (11) defining a containment volume (V) for containing at least one product. The bucket (10) comprises a first flap (12) and a second flap (13) mutually movable between a respective closing configuration, in which they at least partially occlude a lower opening (A2) of the containment body (11), and a respective opening configuration, in which they allow the passage of at least one product from the lower opening (A2). Furthermore, the bucket (10) comprises driving means (14) activatable on the first flap (12) and the second flap (13) to move them between the closing configuration and the opening configuration. The driving means (14) comprises a first linkage (15) and a second linkage (16) that are connected respectively to the first flap (12) and to the second flap (13) to move them in a mutually independent manner. Furthermore, the driving means (14) comprises a first abutment portion (17) and a second abutment portion (18), operatively connected to the first linkage (15) and to the second linkage (16) respectively, which can be selectively activatable by an actuating element of a weighing head for driving the first linkage (15) and/or the second linkage (16).

## Description

The present invention relates to a bucket for a weighing head, in particular for a weighing head of a multi-head weighing machine, a weighing head and a multi-head weighing machine.

Therefore, the present invention finds a vast field of application in the sector of packaging machines for products of various kinds, and mainly of the food type.

In the sector of weighing and dosing of food products or the like, automatic machines are generally used, commonly referred to as multi-head weighing machines, which are configured to weigh the product fed thereto and then convey the predetermined dose to a packaging machine.

Multi-head weighing machines comprise a plurality of weighing heads circumferentially arranged around a central body and a plurality of respective radial ducts, generally vibrators, which move the product towards the weighing heads.

The weighing heads generally comprise a pre-dosing bucket, adapted to receive product from the above-mentioned vibrators, and a weighing bucket, arranged below the pre-dosing bucket along a vertical direction and configured to receive at least a part of the product released by falling from the pre-dosing bucket.

In particular, the weighing bucket can comprise a pair of opposite and mutually movable lower rotatable flaps to allow or prevent the product from exiting the weighing bucket.

Essentially, the weighing bucket comprises a linkage active on both flaps to move them simultaneously mutually away from each other or mutually towards each other so as to allow or prevent the product from exiting the bucket.

To cope with the need for ever higher weighing speeds, weighing heads have been developed in which the weighing buckets are capable of independently opening the two flaps so as to selectively release the product inside one of the two independent ways of a two-way conveyor.

Disadvantageously, the independent driving of the two flaps requires the presence of two actuators independent of each other, and each of which is dedicated to driving one of the two flaps.

Therefore, the use of such weighing buckets necessitates the adoption of peculiar weighing heads specially equipped with the aforementioned actuators so that the flaps can be moved independently.

That is, the above-mentioned buckets are fundamentally incompatible with the weighing heads commonly used for buckets provided with pairs of simultaneously opening flaps.

Therefore, the use of buckets with independent double opening causes a strong limitation of the operational flexibility of the packaging line.

Furthermore, the aforementioned actuators require dedicated feeding means and cause an increase in the number of movable parts with a consequent increase in operating costs and a reduction in the operating efficiency of the weighing machine.

In this context, the technical task underpinning the present invention is to provide a bucket for a weighing head, in particular for a weighing head of a multi-head weighing machine, a weighing head and a multi-head weighing machine which obviate the drawbacks in the prior art as described above. In particular, it is the object of the present invention to provide a bucket for a weighing head, in particular for a weighing head of a multi-head weighing machine, a weighing head and a multi-head weighing machine having increased operational flexibility.

Another object of the present invention is to provide a bucket for a weighing head, in particular for a weighing head of a multi-head weighing machine, a weighing head and a multi-head weighing machine which ensure an increase in operational efficiency.

Another object of the present invention is to provide a bucket for a weighing head, in particular for a weighing head of a multi-head weighing machine, which is compatible with common weighing heads and which, therefore, overcomes the need to be mounted on a specially engineered weighing head.

The specified technical task and the specified objects are substantially achieved by a bucket for a weighing head, in particular for a weighing head of a multi-head weighing machine, a weighing head and a multi-head weighing machine comprising the technical features set forth in one or more of the appended claims.

The dependent claims correspond to possible embodiments of the invention.

Further features and advantages of the present invention will become more apparent from the following approximate, and hence non-limiting, description of a preferred, but not exclusive, embodiment of a bucket for a weighing head, in particular for a weighing head of a multi-head weighing machine, a weighing head and a multi-head weighing machine, as illustrated in the appended drawings, in which:

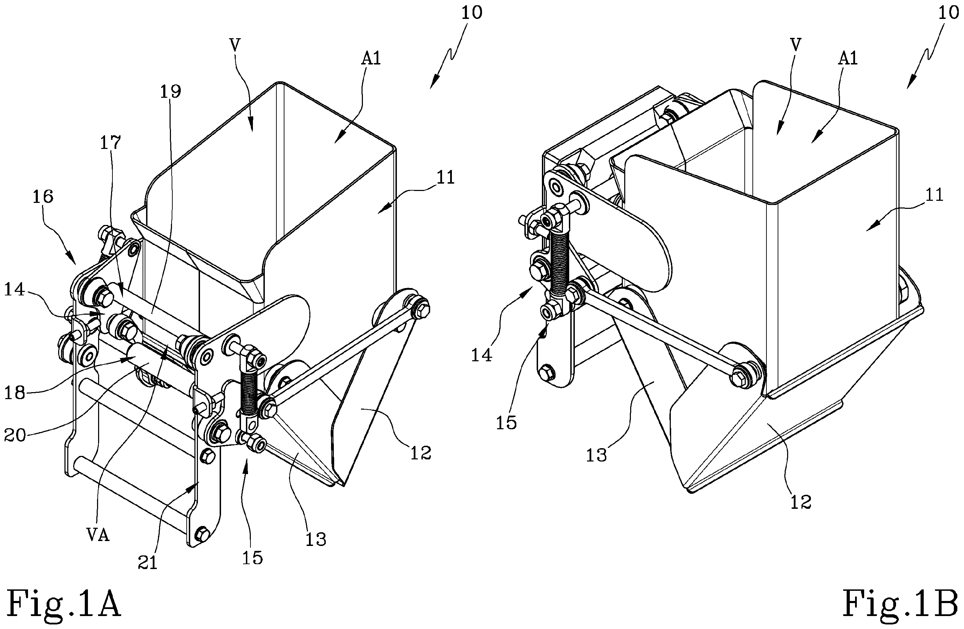

- figures 1A-1B are perspective representations according to respective angles of a bucket for a weighing head, in particular for a weighing head of a multi-head weighing machine, in accordance with a possible embodiment of the present invention;
- figures 2A-2C are perspective views according to respective operating configurations of the bucket for a weighing head, in particular for a weighing head of a multi-head weighing machine, of figures 1A-1B.
- figures 3A-3B are perspective representations of a multi-head weighing machine in accordance with respective possible embodiments of the present invention.

With reference to the attached figures, the reference numeral 10 overall indicates a bucket for a weighing head, in particular for a weighing head of a multi-head weighing machine, referred to in the following as bucket 10.

The bucket 10 comprises a containment body 11 defining a containment volume "V" for containing at least one product and having an upper opening "A1" and a lower opening "A2" respectively adapted to allow an entry and an exit of the product from the containment volume "V".

In particular, the bucket 10 can be connected or connectable to a weighing head of a multi-head weighing machine and/or to a multi-head weighing machine to perform at least a partial dosing of at least one product.

Furthermore, the bucket 10 comprises a first flap 12 and a second flap 13 mutually movable between a closing configuration, in which they at least partially occlude the lower opening "A2", and an opening configuration, in which they allow the passage of at least one product from the lower opening "A2".

That is, the first flap 12 and the second flap 13 can be rotatably connected to the containment body 11 and reversibly movable between the closing configuration and the opening configuration.

The bucket 10 comprises driving means 14 activatable on the first flap 12 and on the second flap 13 and configured to move the first flap 12 and/or the second flap 13 between the closing configuration and the opening configuration.

Advantageously, the driving means 14 comprises a first linkage 15 and a second linkage 16 that are connected respectively to the first flap 12 and to the second flap 13 to move them between the closing configuration and the opening configuration in a mutually independent manner. That is, the first flap 12 and the second flap 13 can be moved autonomously and independently from each other by the driving means 14. Purely by way of non-limiting example, the first linkage 15 and a second linkage 16 can be alternately activatable to perform a selective and independent movement of the first flap 12 and of the second flap 13.

Thereby, the first linkage 15 and the second linkage 16 ensure an independent movement of the first flap 12 and the second flap 13 between respective opening and closing configurations, allowing, for example, the product to be released in different release stations as a function of one or more operational requirements. Such an independence in the movement of the first flap 12 and the second flap 13 allows, for example, to achieve operating conditions in which the first flap 12 is in a closing configuration and the second flap 13 is in an opening configuration, or vice versa.

Purely by way of non-limiting example, the bucket 10 can define the weighing bucket and/or the memory bucket of a weighing head, and the aforementioned first linkage 15 and second linkage 16 can allow a selective and independent movement of the first flap 12 and the second flap 13 so as to perform a selective release of product inside a conveyor of a pair of concentric conveyors.

Advantageously, the driving means 14 comprises a first abutment portion 17 and a second abutment portion 18 operatively connected to the first linkage 15 and the second linkage 16, respectively.

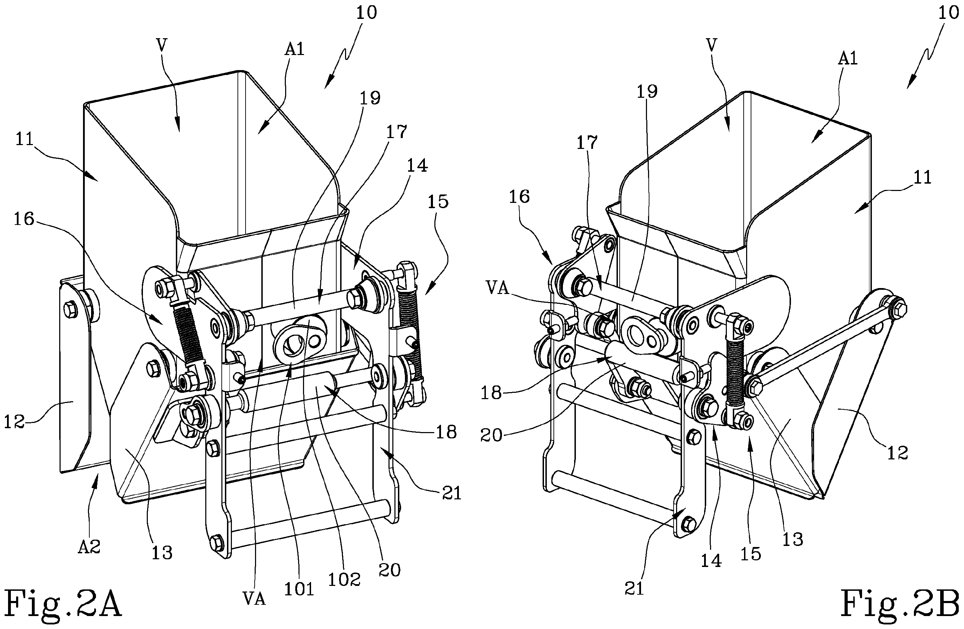

As illustrated in figures 2A-2C, the first abutment portion 17 and/or the second abutment portion 18 can be selectively activatable by an actuating element 102 of a weighing head for driving the first linkage 15 and/or the second linkage 16.

It should be noted that the actuating element 102 can be defined by the actuating element commonly used for opening buckets provided with two simultaneously opening flaps and/or buckets provided with a single movable flap defining the bottom of the bucket.

Thereby, the bucket 10 can be connected or connectable to a common weighing head of a multi-head weighing machine so that the first abutment portion 17 and the second abutment portion 18 can be selectively activatable by the actuating means commonly used for opening and/or closing simultaneously opening buckets without the need to make structural modifications to the weighing head and/or to resort to the adoption of specially made weighing heads.

That is, the first abutment portion 17 and the second abutment portion 18 can be activated by means of the same actuating element used for opening buckets provided with two simultaneously opening flaps and/or buckets provided with a single movable flap defining the bottom of the bucket.

Thereby, the first abutment portion 17 and the second abutment portion 18 give the basket 10 a marked operational flexibility which allows it to be used interchangeably with the aforementioned buckets of different types as a function of the peculiar operational requirements, for example as a function of the need to use a single conveyor or a pair of concentric conveyors downstream of the weighing head.

That is, the present invention allows to use the same weighing head irrespective of the type of bucket used, causing a large increase in the operational flexibility and efficiency of the entire packaging line.

Furthermore, the use of a single actuator for the first abutment portion 17 and the second abutment portion 18 allows to reduce the movable parts and is reflected in an increase in the efficiency of the weighing head.

Purely by way of non-limiting example, the first abutment portion 17 and the second abutment portion 18 can be selectively activated through geometric interference with the actuating element.

For example, the first abutment portion 17 and the second abutment portion 18 can be alternately activatable by the actuating element so as to perform a selective and independent movement of the first flap 12 and the second flap 13.

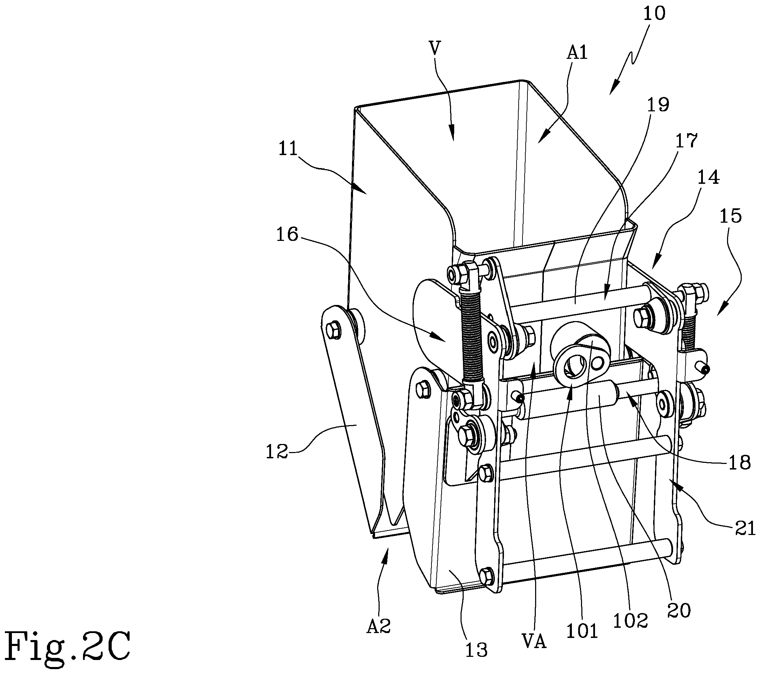

Preferably, the first abutment portion 17 and the second abutment portion 18 define a driving volume "VA" therebetween which is adapted to at least partially receive the actuating element by insertion so that the actuating element is reversibly movable between at least one actuating position (as illustrated in figures 2A, 2C), in which it is active on the first linkage 15 and/or on the second linkage 16 to perform a movement of the first flap 12 and/or of the second flap 13, and at least one resting position (as illustrated in figure 2B), in which it is not active on the driving means 14.

In accordance with a possible embodiment and as illustrated in the attached figures, the first abutment portion 17 and the second abutment portion 18 are facing each other, facilitating the driving of the first linkage 15 and the second linkage 16 by the aforementioned driving means 14.

Purely by way of non-limiting example, the driving means 14 can comprise a first driving bar 19 and a second driving bar 20 at least partially defining the first abutment portion 17 and the second abutment portion 18, respectively.

In particular, the first driving bar 19 and the second driving bar 20 can have respective extension directions which are substantially parallel to each other.

Preferably, the first driving bar 19 and/or the second driving bar 20 and/or the first abutment portion 17 and/or the second abutment portion 18 can have substantially horizontal extension directions.

Furthermore, the first abutment portion 17 can be arranged in a position proximal to the upper opening "A1" and the second abutment portion 18 can be arranged in a position proximal to the lower opening "A2".

For example, the first abutment portion 17 can be arranged above the second abutment portion 18 along a vertical direction at least during a use condition of the bucket 10.

Thereby, the bucket 10 ensures a simple driving of the first linkage 15 and/or the second linkage 16, allowing, for example, a driving by means of a limited movement of the actuating element 102 between the aforementioned actuating and resting positions.

Preferably, the bucket 10 can be connected or connectable to the weighing head and/or to the multi-head weighing machine so that the actuating element 102 is at least partially interposed between the first abutment portion 17 and the second abutment portion 18 during a use configuration. Furthermore, the bucket 10 can comprise connecting means 21 adapted to reversibly connect the bucket to the weighing head and/or to the multi-head weighing machine.

Advantageously, the bucket 10 can be retrofitted to a weighing head having an actuating element which is reversibly movable between at least one actuating position and at least one resting position in accordance with the prior art.

In accordance with a further aspect, the present invention relates to a weighing head 100 for a multi-head weighing machine comprising at least one bucket 10 in accordance with what has been described above.

Furthermore, the weighing head 100 can comprise an actuating means 101 activatable on the driving means 14 for performing a movement of the first flap 12 and/or the second flap 13.

In particular, the actuating means 101 can comprise an actuating element 102 reversibly movable between at least one actuating position, in which it is active on the driving means 14 for performing a movement of the first flap 12 and/or of the second flap 13, and at least one resting position, in which it is not active on the driving means 14.

Preferably, the actuating element 102 is reversibly movable between a first actuating position (as illustrated in figure 2A), in which it is active on the first abutment portion 17 to perform a movement of the first flap 12, and a second actuating position, in which it is active on the second abutment portion 18 to perform a movement of the second flap 13 (as illustrated in figure 2C).

For example, the actuating element 102 can be reversibly movable between the first actuating position, in which it is abutting on the first abutment portion 17 to perform a movement of the first flap 12, and a second actuating position, in which it is abutting on the second abutment portion 18 to perform a movement of the second flap 13.

In accordance with a possible embodiment of the present invention, the resting position can be at least partially interposed between the first actuating position and the second actuating position (as illustrated in figure 2B).

In particular, the actuating means 101 can be configured to move the actuating element 102 along a substantially circular path.

Preferably, the actuating means 101 can be configured to move the actuating element 102 in a substantially vertical plane.

For example, the actuating means 101 can be configured to move the actuating element 102 between a raised position (figure 2A), for example corresponding to the first actuating position, and a lowered position (figure 2C), for example corresponding to the second actuating position.

Purely by way of non-limiting example, the actuating means 101 can comprise a stepper motor active on the actuating element 102 for reversibly moving it between the at least one actuating position and the at least one resting position.

Preferably, the weighing bucket 10 can define a pre-dosing bucket and/or a memory bucket and/or a weighing bucket of the weighing head 100.

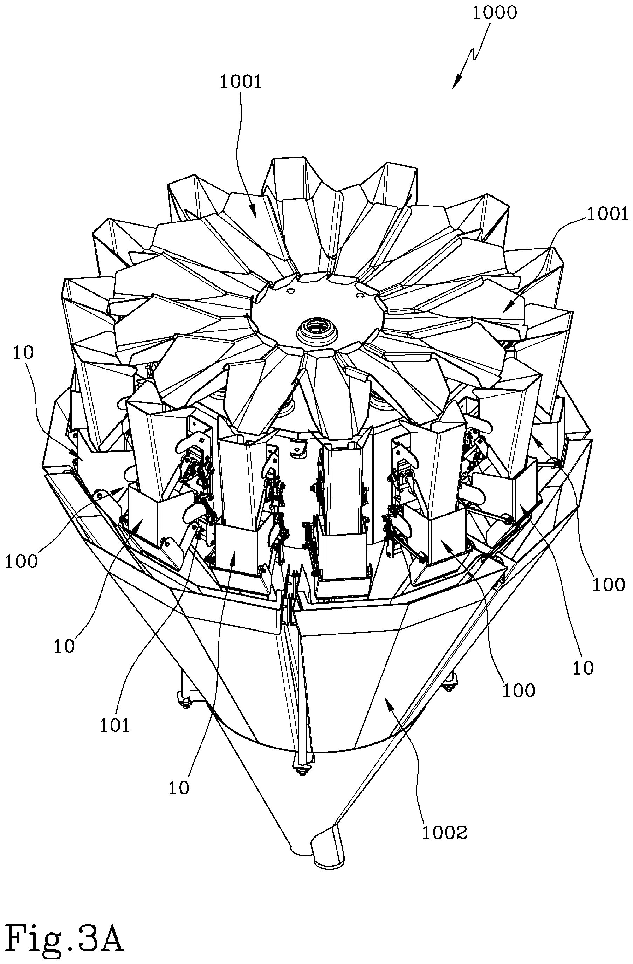

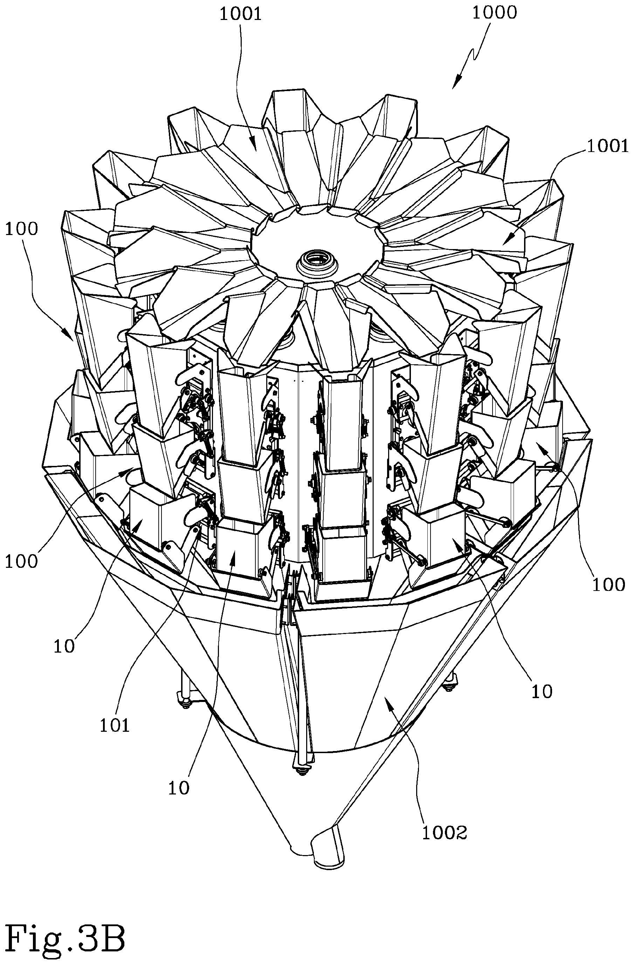

Purely by way of non-limiting example, the bucket 10 can define the weighing bucket (as illustrated in figure 3A) and/or the memory bucket (as illustrated in figure 2B) of the weighing head 100, and the aforementioned first linkage 15 and second linkage 16 can allow a selective and independent movement of the first flap 12 and the second flap 13 so as to perform a selective release of product inside a conveyor of a pair of concentric conveyors. In accordance with a possible embodiment, the weighing bucket can be vertically aligned and substantially facing the memory bucket so that the product of the weighing bucket is only released inside the memory bucket and that the function for the selective release of the product inside one of the conveyors of a pair of concentric conveyors is delegated solely to the memory bucket, which is defined by the bucket 10. In accordance with a further aspect, the present invention relates to a multi-head weighing machine 1000 comprising a plurality of weighing heads. In particular, the at least one weighing head is a weighing head 100 in accordance with what has been described above.

Furthermore, the multi-head weighing machine 1000 can comprise feeding means 1001 for feeding at least one product, adapted to feed at least one product to at least one bucket of the aforementioned plurality of weighing heads, and at least one conveyor 1002 adapted to receive the product from at least one weighing head and convey it towards a packaging machine.

Preferably, the multi-head weighing machine 1000 can comprise a first conveyor and a second conveyor which are at least partially concentric and the bucket 10 is configured to selectively release at least one product in the first conveyor or in the second conveyor.

It is therefore noted that the present invention achieves the proposed objects by making a bucket for a weighing head, in particular for a weighing head of a multi-head weighing machine, a weighing head and a multi-head weighing machine having an increased operational flexibility thanks to the presence of a first abutment portion and a second abutment portion selectively activatable by an actuating element of the weighing head to move the first flap and the second flap between respective opening and closing configurations.

Advantageously, the present invention allows to overcome the need for weighing heads specially made for the use of buckets provided with independently opening flaps thanks to the creation of driving means activatable by means of standardised actuating elements commonly used in weighing heads for buckets with simultaneously opening flaps or with a single flap.

## Claims

1. A bucket (10) for a weighing head, in particular for a weighing head of a multi-head weighing machine, comprising:
- a containment body (11) defining a containment volume for containing at least one product, said containment body (11) having an upper opening (A1) and a lower opening (A2) respectively adapted to allow an entry and an exit of the product from said containment volume;
- a first flap (12) and a second flap (13) mutually movable between a respective closing configuration, in which they at least partially occlude said lower opening (A2), and a respective opening configuration, in which they allow the passage of at least one product from said lower opening (A2);
- driving means (14) activatable on said first flap (12) and said second flap (13) and configured to move said first flap (12) and/or said second flap (13) between said closing configuration and said opening configuration;
**characterised in that** said driving means (14) comprises a first linkage (15) and a second linkage (16) that are connected respectively to said first flap (12) and to said second flap (13) to move said first flap (12) and said second flap (13) between said respective closing configurations and said opening configurations in a mutually independent manner; and wherein said driving means (14) comprises a first abutment portion (17) and a second abutment portion (18) operatively connected to said first linkage (15) and to said second linkage (16), respectively, said first abutment portion (17) and said second abutment portion (18) being selectively activatable by an actuating element of a weighing head for driving said first linkage (15) and/or said second linkage (16).

2. The bucket according to claim 1, wherein said first abutment portion (17) and said second abutment portion (18) define a driving volume (VA) therebetween which is adapted to at least partially receive the actuating element by insertion so that the actuating element is reversibly movable between at least one actuating position, in which it is active on said first linkage (15) and/or on said second linkage (16) to perform a movement of said first flap (12) and/or of said second flap (13), and at least one resting position, in which it is not active on said driving means (14).

3. The bucket according to claim 1 or 2, wherein said first abutment portion (17) and said second abutment portion (18) are facing each other.

4. The bucket according to one or more of the preceding claims, wherein said first abutment portion (17) is arranged in a position proximal to said upper opening (A1); and wherein said second abutment portion (18) is arranged in a position proximal to said lower opening (A2).

5. The bucket according to one or more of the preceding claims, wherein said driving means (14) comprises a first driving bar (19) and a second driving bar (20) defining at least partially said first abutment portion (17) and said second abutment portion (18), respectively, said first driving bar (19) and said second driving bar (20) having respective extension directions substantially parallel to each other.

6. The bucket according to claim 5, wherein said first driving bar (19) and/or said second driving bar (20) and/or said first abutment portion (17) and/or said second abutment portion (18) substantially have horizontal extension directions.

7. The bucket according to one or more of the preceding claims, said first linkage (15) and said second linkage (16) are alternatively activatable to perform a selective and independent movement of said first flap (12) and said second flap (13).

8. The bucket according to one or more of the preceding claims, wherein said first abutment portion (17) and said second abutment portion (18) are selectively activated through a geometric interference with the actuating element.

9. The bucket according to one or more of the preceding claims, connected or connectable to a weighing head and/or a multi-head weighing machine so that the actuating element is at least partially interposed between said first abutment portion (17) and said second abutment portion (18) during a use configuration.

10. A weighing head (100) for a multi-head weighing machine comprising:
- at least one bucket (10) according to one or more of the preceding claims;
- an actuating means (101) activatable on said driving means (14) for performing a movement of said first flap (12) and/or of said second flap (13) and comprising an actuating element (102) reversibly movable between at least one actuating position, in which it is active on said driving means (14) for performing a movement of said first flap (12) and/or of said second flap (13), and at least one resting position, in which it is not active on said driving means (14).

11. The weighing head according to claim 10, wherein said actuating element (102) is reversibly movable between a first actuating position, in which it is active on said first abutment portion (17) to perform a movement of said first flap (12), and a second actuating position, in which it is active on said second abutment portion (18) to perform a movement of said second flap (13).

12. The weighing head according to claim 11, wherein said actuating means (101) is configured to move said actuating element (102) between a raised position, for example corresponding to said first actuating position, and a lowered position, for example corresponding to said second actuating position.

13. The weighing head according to one or more of claims 10-12, wherein said resting position is at least partially interposed between said first actuating position and said second actuating position.

14. The weighing head according to one or more of claims 10-13, wherein said actuating means is configured to move said actuating element (102) along a substantially circular path, preferably in a substantially vertical plane.

15. A multi-head weighing machine (1000) comprising:
- a plurality of weighing heads, wherein at least one weighing head is a weighing head (100) according to one or more of claims 10-14;
- feeding means (1001) for feeding at least one product adapted to feed at least one product to at least one bucket of said plurality of weighing heads;
- at least one conveyor (1002) adapted to receive the product from at least one weighing head and convey it towards a packaging machine.
